(19) Europäisches Patentamt
European Patent Office
Office européen des brevets

(11) **EP 4 227 912 B1**

(12) **FASCICULE DE BREVET EUROPEEN**

(45) Date de publication et mention
de la délivrance du brevet:
**01.04.2026 Bulletin 2026/14**

(21) Numéro de dépôt: **23152690.6**

(22) Date de dépôt: **20.01.2023**

(51) Classification Internationale des Brevets (IPC):
**G06V 20/56** *(2022.01)* **G06V 10/44** *(2022.01)*

(52) Classification Coopérative des Brevets (CPC):
**G06V 20/588; G06V 10/44**

(54) **PROCÉDÉ DE DÉTECTION D'UNE LIGNE CENTRALE D'UNE VOIE DE CIRCULATION**

VERFAHREN ZUR ERKENNUNG EINER MITTELLINIE EINES VERKEHRSWEGES

METHOD FOR DETECTING A CENTRAL LINE OF A ROAD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.02.2022 FR 2201181**

(43) Date de publication de la demande:
**16.08.2023 Bulletin 2023/33**

(73) Titulaire: **Ampere SAS**
**92100 Boulogne-Billancourt (FR)**

(72) Inventeur: **PAPAMICHAIL, Chrysanthi**
**78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
- **CHENHAO WANG ET AL: "Precise curvature estimation by cooperating with digital road map", INTELLIGENT VEHICLES SYMPOSIUM, 2008 IEEE, IEEE, PISCATAWAY, NJ, USA, 4 June 2008 (2008-06-04), pages 859 - 864, XP031318945, ISBN: 978-1-4244-2568-6**
- **DU JUAN ET AL: "A Modified Road Centerlines Search Method from Remote Sensing Images", 2017 INTERNATIONAL CONFERENCE ON COMPUTER TECHNOLOGY, ELECTRONICS AND COMMUNICATION (ICCTEC), IEEE, 19 December 2017 (2017-12-19), pages 67 - 70, XP033591194, DOI: 10.1109/ICCTEC.2017.00024**
- **NISHIDA M ET AL: "Development of lane recognition algorithm for steering assistance system", SAE TRANSACTIONS, SOCIETY OF AUTOMOTIVE ENGINEERS, INC., WARRENDALE, PA, US, vol. 114, no. 7, 1 January 2005 (2005-01-01), pages 129 - 135, XP008127435, ISSN: 0096-736X**

## Description

### Domaine technique de l'invention

La présente invention concerne de manière générale les aides à la conduite de véhicules automobiles.

Elle s'applique plus particulièrement aux voitures et autres engins motorisés circulant sur routes, mais s'applique également à d'autres domaines tels que la robotique.

L'invention concerne un procédé de détection d'une ligne centrale d'une voie appartenant à une route qui est empruntée par un véhicule automobile.

Elle concerne également un véhicule automobile adapté à mettre en œuvre un tel procédé de détection.

### Etat de la technique

Dans un souci de sécurisation des véhicules automobiles, on équipe actuellement ces derniers de systèmes d'aide à la conduite voire de systèmes de conduite hautement automatisée. Un exemple de l'art antérieur est le document CHENHAO WANG ET AL: "Precise curvature estimation by cooperating with digital road map", INTELLIGENT VEHICLES SYMPOSIUM, 2008 IEEE, IEEE, PISCATAWAY, NJ, USA, 4 juin 2008 (2008-06-04), pages 859-864, XP031318945, ISBN: 978-1-4244-2568-6.

Il s'agit typiquement de systèmes de maintien au centre de la voie (plus connus sous l'acronyme anglais de LKA pour « Lane Keeping Assist »), de systèmes de régulation de vitesse adaptative...

Nombre de ces systèmes ont besoin, pour fonctionner, de connaître la position de la ligne centrale de la voie de circulation empruntée par le véhicule, voire aussi les positions des lignes centrales d'autres voies de circulation (par exemple celle vers laquelle le véhicule se dirige lorsqu'il change de voie).

Actuellement, il est connu d'utiliser un capteur, tel qu'une caméra, qui embarque des moyens de traitement d'images afin de déterminer la position de cette ligne centrale de voie.

Il est également connu d'utiliser plusieurs capteurs, tels qu'une caméra couplée à un télédétecteur RADAR, puis de traiter ensemble les données issues de ces différents capteurs, par exemple par fusion de données, afin d'en déduire la position de la ligne centrale de voie.

Ces différentes solutions permettent de réaliser une approximation de la position de la ligne centrale.

Malheureusement, elles ne donnent pas entière satisfaction puisqu'il arrive que la ligne centrale ainsi identifiée ne permette pas d'assurer une conduite du véhicule qui soit confortable et qui offre les garanties de sécurité souhaitées.

### Présentation de l'invention

Afin de remédier à l'inconvénient précité de l'état de la technique, la présente invention propose de construire plusieurs lignes centrales pouvant potentiellement être utilisées, puis de sélectionner celle qui est la plus adaptée aux conditions de circulation du véhicule automobile.

L'invention est définie par les revendications.

Plus particulièrement, on propose un procédé de détection dans lequel il est prévu des étapes de :

- acquisition d'informations caractérisant deux lignes de bord de voie (celles qui délimitent la voie de circulation dont on souhaite connaître la ligne centrale),
- acquisition de données relatives à la posture et/ou au déplacement du véhicule automobile sur la route, et notamment sur la voie de circulation,
- création d'au moins deux lignes centrales candidates situées entre les deux lignes de bord de voie, au cours de laquelle une unité électronique et/ou informatique calcule des coefficients caractérisant lesdites au moins deux lignes centrales candidates en fonction des informations acquises,
- sélection d'une des lignes centrales candidates en fonction des données acquises, et
- déduction de la ligne centrale de la voie en fonction de la ligne centrale candidate sélectionnée.

Ainsi, grâce à l'invention, plusieurs lignes centrales candidates sont calculées et celle sélectionnée dépend du comportement instantané du véhicule automobile (par exemple de sa position sur la chaussée et/ou de son vecteur vitesse et/ou de son vecteur accélération et/ou de son angle de cap et/ou de sa vitesse de lacet et/ou de son accélération en lacet). De cette façon, le procédé propose une détection de ligne centrale qui s'adapte au comportement du véhicule automobile, ce qui assure un bon confort de conduite et une conduite en toute sécurité.

En effet, le résultat de l'invention, lorsqu'il est employé pour diriger le véhicule automobile de façon automatisée, permet au véhicule de suivre des trajectoires plus cohérentes compte tenu de sa position et de sa vitesse. En d'autres termes, la trajectoire du véhicule est plus fluide et plus fiable.

On notera ainsi que deux véhicules identiques (donc équipés du même système de détection) empruntant successivement la même voie de circulation ne détecteront pas nécessairement la même ligne centrale si leurs positions et/ou caractéristiques dynamiques ne sont pas les mêmes.

Un avantage de l'invention est qu'elle ne génère aucun surcoût sur le véhicule où elle est intégrée, puisque les capteurs ou équipements utilisés sont déjà classiquement embarqués dans des véhicules de moyenne gamme.

On notera aussi que cette solution ne requiert aucune connectivité avec d'autres véhicules ou infrastructures, ce qui rend cette solution peu onéreuse et robuste.

D'autres caractéristiques avantageuses et non limitatives du procédé de détection conforme à l'invention, prises individuellement ou selon toutes les combinaisons techniquement possibles, sont les suivantes :

- les coefficients caractérisant l'une au moins des lignes centrales candidates sont calculés en fonction uniquement des informations caractérisant l'une des deux lignes de bord de voie et de la largeur de la voie ;
- les coefficients caractérisant l'une au moins des lignes centrales candidates sont calculés en fonction des informations caractérisant les deux lignes de bord de voie ;
- exactement deux lignes centrales candidates sont créées (pour réduire la charge de calcul) ;
- exactement trois lignes centrales candidates sont créées (ce qui offre une variété plus grande dans le choix, sans trop surcharger les calculs) ;
- plus de trois lignes centrales candidates sont créées (pour garantir une meilleure précision) ;
- il est prévu une étape d'estimation de données relatives à la posture et/ou au déplacement que le véhicule automobile présentera à un instant futur, puis une autre étape de sélection d'une des lignes centrales candidates en fonction des données estimées, la ligne centrale de la voie étant ensuite déduite en fonction des deux lignes centrales candidates sélectionnées (celle sélectionnée initialement à l'étape de sélection puis celle sélectionnée durant ladite autre étape de sélection) ;
- si la même ligne centrale candidate a été sélectionnée deux fois, à l'étape de déduction, il est déduit que la ligne centrale de la voie est la ligne centrale candidate sélectionnée ;
- si les deux lignes centrales candidates sélectionnées sont différentes, à l'étape de déduction, il est prévu de construire la ligne centrale de la voie en fonction des coefficients caractérisant les deux lignes centrales candidates sélectionnées ;
- à chaque étape de sélection, il est prévu de calculer une distance entre le véhicule automobile et chaque ligne centrale candidate, et de sélectionner la ligne centrale candidate pour laquelle la distance calculée est la plus petite ;
- la distance calculée entre le véhicule automobile et chaque ligne centrale candidate est une distance statistique, par exemple une distance de Mahalanobis, qui dépend d'une matrice de covariance associée à ladite ligne centrale candidate.

L'invention propose également un véhicule automobile comportant des moyens d'acquisition d'informations caractérisant deux lignes de bord de voie d'une route empruntée par le véhicule automobile et de données relatives à la posture et/ou au déplacement du véhicule automobile sur la route, et un calculateur adapté à mettre en œuvre un procédé de détection tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Description détaillée de l'invention**

La description qui va suivre en regard des dessins annexés, donnés à titre d'exemples non limitatifs, fera bien comprendre en quoi consiste l'invention et comment elle peut être réalisée.

Sur les dessins annexés :

[Fig.1] est une vue schématique d'un véhicule automobile adapté à mettre en œuvre un procédé conforme à la présente invention ;
[Fig.2] est une vue schématique de dessus du véhicule automobile de la [Fig.1], sur laquelle apparaissent des lignes centrales et de bord de voie de circulation ;
[Fig.3] est un schéma-bloc illustrant les différentes étapes d'un procédé conforme à la présente invention.

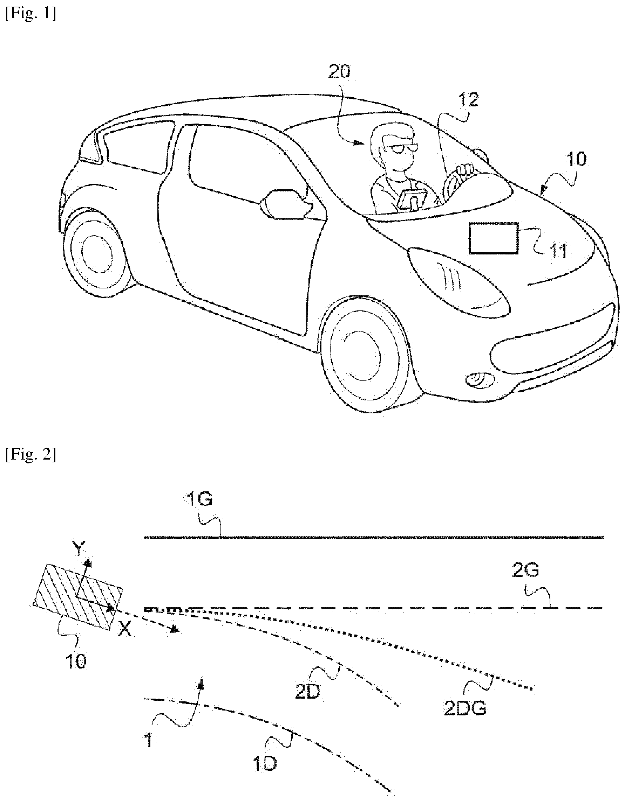

Sur la [Fig.1], on a représenté un véhicule 10 automobile adapté à mettre en œuvre l'invention.

Il s'agit ici d'une voiture. En variante, il pourrait s'agir d'un autre type de véhicule (camion, moto...).

Ici, ce véhicule 10 comporte classiquement un habitacle dans lequel se trouvent notamment un siège pour le conducteur 20 du véhicule, une planche de bord avec un écran d'affichage, et un volant 12.

Ce véhicule 10 comporte un groupe motopropulseur, un système de freinage et un système de direction permettant de faire tourner le véhicule (non visibles sur la figure). Classiquement, le système de direction comporte un actionneur de direction assistée pilotable électroniquement, le groupe motopropulseur comporte un actionneur de commande de moteur pilotable électroniquement, et le système de freinage comporte un actionneur de freinage pilotable électroniquement.

Le véhicule 10 comporte par ailleurs une unité électronique et/ou informatique de traitement (ci-après appelée calculateur 11) comprenant au moins un microprocesseur ou microcontrôleur, au moins une mémoire et des interfaces d'entrée et de sortie.

Grâce à ses interfaces d'entrée, le calculateur 11 est adapté à recevoir différentes données d'entrée, qui proviennent de capteurs ou de calculateurs tiers.

Parmi ces capteurs, il est par exemple prévu :

- un dispositif tel qu'une caméra frontale, permettant de repérer la position du véhicule automobile 10 par rapport à sa voie de circulation, et
- un dispositif tel qu'un télédétecteur RADAR et/ou un télédétecteur LIDAR, permettant de détecter les bords de la route.

Grâce à ses interfaces de sortie, le calculateur 11 est adapté à commander l'écran d'affichage, l'actionneur de direction assistée, l'actionneur de commande de moteur, et l'actionneur de freinage.

Ainsi, le calculateur est adapté à mettre en œuvre des fonctions d'aide à la conduite et/ou des fonctions de conduite automatisée (dans lesquelles le véhicule peut évoluer dans la circulation de façon autonome, sans intervention du conducteur).

Grâce à sa mémoire, le calculateur 11 mémorise une application informatique, constituée de programmes d'ordinateur comprenant des instructions dont l'exécution par le calculateur permet la mise en œuvre du procédé décrit ci-après.

Sur la [Fig.2], on a représenté le véhicule automobile 10 vu de dessus, alors qu'il emprunte une voie de circulation 1 d'une route.

Dans l'exemple ici considéré à titre illustratif, cette route est du type « autoroute ». Seule une des voies de circulation 1 de cette autoroute est ici représentée, à savoir celle empruntée par le véhicule automobile 10.

Sur cette figure, on observe que la voie de circulation 1 est délimitée par deux lignes de bord de voie, à savoir des lignes gauche 1G et droite 1D. Dans cet exemple particulier, la voie de circulation 1 s'élargit puisque le véhicule se trouve au niveau d'une sortie d'autoroute.

Bien entendu, le procédé décrit ci-après s'appliquera à toute autre situation de circulation.

Sur cette [Fig.2], on a également représenté un repère (X, Y) attaché au véhicule automobile 10, qui sera celui considéré pour les calculs développés ci-après. Ce repère comporte une abscisse qui s'étend selon l'axe longitudinal du véhicule, vers l'avant, et une ordonnée qui s'étend vers la gauche du véhicule. Son origine est située par exemple au niveau du centre de gravité du véhicule automobile 10.

L'objectif est de déterminer la position et la forme de la ligne centrale de la voie de circulation 1.

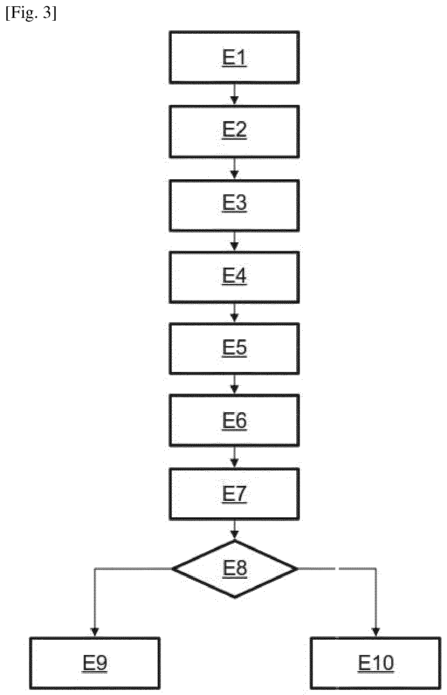

Sur la [Fig.3], on a illustré le procédé que le calculateur 11 est adapté à mettre en œuvre de façon à caractériser cette ligne centrale.

On notera que cette ligne centrale peut être définie comme une ligne qui est sensiblement positionnée au centre de la voie de circulation 1, entre les lignes droite 1D et gauche 1G, et qui sera prise en compte pour piloter le véhicule automobile de façon automatisée.

Comme cela apparaîtra bien à la suite de la lecture de cet exposé, cette ligne centrale ne sera pas forcément centrale au sens géométrique du terme. Il s'agira plutôt d'une ligne proche de cette ligne centrale géométrique.

Ici, la voie de circulation 1 considérée sera la voie sur laquelle le véhicule 10 circule. Bien entendu, il pourrait s'agir d'une autre voie, notamment d'une voie adjacente vers laquelle le véhicule souhaiterait se diriger (par exemple lors d'un changement de voie).

Le procédé de détection de la ligne centrale comporte plusieurs étapes successives, l'ensemble de ces étapes étant répété en boucle à intervalles réguliers de façon à régulièrement mettre à jour les forme et position de cette ligne centrale lorsque le véhicule évolue le long de la route.

Pour résumer, le procédé selon l'invention comporte des étapes consistant à acquérir des informations sur la géométrie de la voie de circulation 1 et sur l'attitude du véhicule automobile 10, puis à créer différentes « lignes centrales candidates » en fonction des informations sur la voie, et enfin à sélectionner l'une de ces lignes centrales candidates en fonction de l'attitude du véhicule automobile 10.

Autrement formulé, comme cela sera bien décrit dans les étapes E1 à E5 qui suivent, l'idée consiste à créer des lignes centrales candidates en fonction des caractéristiques de la voie de circulation 1 empruntée, puis à sélectionner la ligne centrale la plus adaptée au comportement courant (à l'instant $t_0$) du véhicule automobile.

On pourrait envisager que la ligne centrale candidate ainsi sélectionnée forme la ligne centrale de la voie de circulation 1 à considérer pour piloter le véhicule automobile de façon automatisée.

Toutefois, de manière préférentielle, comme cela sera bien décrit aux étapes E6 à E10, une idée supplémentaire sera de prévoir le comportement du véhicule automobile à brève échéance (à un instant t'>t$_0$), puis de sélectionner la ligne centrale candidate la plus adaptée au comportement futur (à l'instant t') du véhicule automobile. Dès lors, il sera possible de déduire la position de la ligne centrale de la voie 1 en fonction des lignes centrales candidates sélectionnées aux instants t$_0$ et t' (lesquelles lignes pourront être les mêmes ou différer l'une de l'autre).

Les étapes détaillées de ce procédé sont les suivantes.

Au cours de la première étape E1, le calculateur 11 reçoit des informations caractérisant les deux lignes de bords de voie (la ligne gauche 1G et la ligne droite 1D).

Ces lignes de bord de voie sont typiquement formées par le bord de l'accotement de la route et/ou par une ligne de marquage au sol.

Ces informations peuvent être fournies directement par un capteur ou être prétraitées.

De manière préférentielle, seules les informations mesurées par les capteurs du véhicule sont ici employées pour détecter ces lignes de bord de voie. Aucune information reçue d'infrastructures routières ou de véhicules tiers n'est par exemple utilisée.

Ici, chaque ligne gauche 1G et droite 1D est modélisée sous forme analytique.

A titre d'exemple, on pourrait prévoir que ces lignes soient modélisées sous une forme polynomiale. Toutefois, ici, elles sont modélisées sous forme de clothoïde, cette forme étant privilégiée car fournissant de meilleurs résultats (pour un nombre identique de coefficients pris en compte).

Une telle clothoïde est définie comme présentant une courbure c qui dépend de sa longueur, ce que l'on peut écrire :

[Math.1]
$$c(l) \ = \ c_0 \ + \ c_1.l$$

Dans cette équation :

- c est donc l'équation de la clothoïde,
- 1 est l'abscisse curviligne de l'arc de la clothoïde, qui varie entre 0 compris et L compris,
- L est la longueur de l'arc de la clothoïde,
- c$_0$ est la courbure à l'origine de l'arc, et
- c$_1$ est le taux de variation de courbure de l'arc.

En d'autres termes, une clothoïde peut être définie par six coefficients que sont :

- x$_0$, l'abscisse du point d'origine de la clothoïde dans le repère (X, Y),
- y$_0$ l'ordonnée de ce point d'origine,
- $\Psi_0$ qui est l'angle de cap à l'origine de l'arc,
- L,
- c$_0$, et
- c$_1$.

Dans la suite, chaque clothoïde sera définie par l'ensemble C de ces six coefficients, ce que l'on pourra noter de la façon suivante : C (x$_0$, y$_0$, $\Psi_0$, c$_0$, c$_1$, L).

La clothoïde caractérisant la forme de la ligne gauche 1G sera alors définie par l'ensemble C$_g$ (x$_{0g}$, y$_{0g}$, $\Psi_{0g}$, c$_{0g}$, c$_{1g}$, L$_g$) tandis que la clothoïde caractérisant la forme de la ligne droite 1D sera définie par l'ensemble Cd (x$_{0d}$, y$_{0d}$, $\Psi_{0d}$, c$_{0d}$, c$_{1d}$, L$_d$).

Pour information, l'angle de cap le long de la clothoïde peut s'écrire de la manière suivante :

[Math.2]
$$\Psi(l) = \Psi_0 + \int_0^l c(u).du = \Psi_0 + c_0.l + \frac{c_1}{2}.l^2$$

Les coordonnées cartésiennes (x, y) d'un point situé le long de la clothoïde peuvent s'écrire de la manière suivante :

$$[\text{Math.3}]$$

$$\begin{cases} x(l) = x_0 + \int_0^l \cos\left(\Psi(u)\right).du \\ y(l) = y_0 + \int_0^l \sin\left(\Psi(u)\right).du \end{cases}$$

Lors de cette première étape E1, on peut envisager que le calculateur 11 reçoive les deux ensembles $C_g$, $C_d$ de l'un des capteurs embarqués dans le véhicule (par exemple de la caméra si cette dernière est équipée d'un processeur adapté à réaliser les opérations nécessaires à la détermination des coefficients recherchés).

En variante, le calculateur 11 pourrait recevoir les données relevées par plusieurs des capteurs du véhicule, fusionner ces données, et en déduire les coefficients recherchés.

Encore en variante, le calculateur pourrait recevoir des coefficients définissant les deux lignes droite 1D et gauche 1G sous formes polynomiales (par exemple sous la forme de coefficients de polynômes d'ordre 3). Dès lors, le calculateur devrait transformer ces coefficients de façon à trouver, par calcul, les valeurs des six coefficients recherchés. Un tel calcul est bien connu de l'Homme du métier et ne sera donc pas ici fourni.

Lors de cette étape E1, en plus des coefficients précités, le calculateur 11 reçoit les deux matrices de variance-covariance (ci-après appelées matrices de covariance) associées respectivement aux coefficients des deux lignes droite 1D et gauche 1G. Chaque matrice de covariance permet de tenir compte de l'incertitude dans la détection de chaque ligne de bord de voie par le ou les capteurs.

Ces matrices sont par exemple fournies par le constructeur des capteurs employés. En variante, elles peuvent être déterminées lors d'une campagne de test des capteurs et enregistrées dans la mémoire du calculateur. Les coefficients de ces matrices sont de préférence invariables.

On notera ici que si plusieurs capteurs sont utilisés pour déterminer les coefficients caractérisant une ligne de bord de voie, leurs incertitudes seront associées entre elles afin d'obtenir la matrice de covariance d'une ligne détectée.

Enfin, lors de l'étape E1, le calculateur 11 acquiert des données relatives à la posture et/ou à la cinématique du véhicule automobile 10 dans sa voie de circulation 1. Il s'agit ici de données cinématiques qui sont préférentiellement obtenues grâce aux seuls capteurs embarqués dans le véhicule automobile 10.

Ici, ces données comprennent des valeurs de :

- vitesse V du véhicule automobile par rapport au sol, exprimée en m/s,
- accélération longitudinale $a_x$ du véhicule automobile selon l'axe X, exprimée en m/s$^2$,
- accélération latérale $a_y$ du véhicule automobile selon l'axe Y, exprimée en m/s$^2$,
- vitesse de lacet du véhicule automobile, exprimée en rad/s,
- accélération en lacet du véhicule automobile, exprimée en rad/s$^2$,
- angle de la roue avant du véhicule automobile, exprimée en rad,
- angle de la roue arrière du véhicule automobile, exprimée en rad, et
- courbure instantanée $c_{0,ego}$ de la trajectoire du véhicule automobile (cette courbure étant ici définie par l'inverse du rayon de courbure, exprimé en m$^{-1}$).

La seconde étape E2 consiste, pour le calculateur 11, à construire par calcul plusieurs lignes centrales candidates.

L'idée ici consiste à construire au moins deux lignes centrales candidates, de façon à pouvoir ensuite sélectionner la meilleure compte-tenu des conditions selon lesquelles le véhicule automobile 10 circule sur sa voie.

Cette construction est entièrement réalisée par le calculateur 11. Toutefois, en variante, une partie des lignes centrales candidates pourraient être créées par le processeur de la caméra. Toutefois, cette solution n'est pas privilégiée puisqu'inutilement couteuse.

Ici et de manière préférentielle, exactement trois lignes centrales candidates sont construites (voir [Fig.2]). En variante, ce nombre pourrait être plus restreint (égal à deux) ou plus grand.

Chacune de ces lignes est modélisée par une clothoïde.

L'une de ces lignes centrales candidates (dite ligne candidate gauche 2G) est créée sur la base uniquement de la ligne de bord de voie gauche 1G et de la largeur de la voie. En d'autres termes, cette ligne candidate gauche 2G est définie par un ensemble de six coefficients dont les valeurs sont déduites des valeurs des coefficients de la clothoïde représentative de la ligne gauche 1G et de la valeur de la largeur de la voie.

Une de ces lignes centrales candidates (dite ligne candidate droite 2D) est créée sur la base uniquement de la ligne de bord de voie droite 1D et de la largeur de la voie.

Enfin, la troisième de ces lignes centrales candidates (dite ligne candidate intermédiaire 2DG) est créée sur la base tant de la ligne droite 1D que de la ligne gauche 1G.

En variante, ces trois lignes pourraient être modélisées autrement. Typiquement, les trois lignes pourraient toutes être calculées en fonction des formes des deux lignes de bord de voie.

Encore en variante, l'une des lignes au moins pourrait ne dépendre d'aucune des deux lignes de bord de voie, typiquement lorsque l'une des capteurs (par exemple la caméra) fournit directement les coefficients d'une ligne centrale candidate.

Dans le mode de réalisation ici considéré, la ligne candidate gauche 2G est le résultat d'une opération de translation de la clothoïde définissant la ligne gauche 1G, sur la moitié de la largueur de la voie et vers le centre de celle-ci. De la même manière, la ligne candidate droite 2D est le résultat d'une opération de translation de la clothoïde définissant la ligne droite 1D, sur la moitié de la largueur de la voie et vers le centre de celle-ci.

Ainsi peut-on écrire que :

- la ligne candidate gauche 2G est définie par l'ensemble de coefficients $C_{gg}$ ($x_{0g}$, ($y_{0g}$ +$y_{0d}$)/2, $\Psi_{0g}$, $c_{0g}$, $c_{1g}$, $L_g$).
- la ligne candidate droite 2D est définie par l'ensemble de coefficients $C_{dd}$ ($x_{0d}$, ($y_{0g}$ +$y_{0d}$)/2, $\Psi_{0d}$, $c_{0d}$, $c_{1d}$, $L_d$).

La ligne candidate intermédiaire 2DG pourrait quant à elle être obtenue de diverses manières. Ici, une opération de type barycentrique est employée. Ainsi, on peut considérer que cette ligne est définie par l'ensemble de coefficients $C_{dg}$ (($x_{0g}$+$x_{0d}$)/2, ($y_{0g}$+$y_{0d}$)/2, ($\Psi_{0g}$+ $\Psi_{0d}$)/2, ($c_{0g}$+$c_{0d}$)/2, ($c_{1g}$+ $c_{1d}$)/2, ($L_g$+$L_d$)/2).

La troisième étape E3 consiste pour le calculateur 11 à calculer la matrice de covariance de chaque ligne candidate.

Ce calcul est réalisé en fonction de la manière selon laquelle chacune de ces lignes candidates a été élaborée.

Plus précisément, la matrice de covariance de chaque ligne candidate est calculée en fonction des coefficients de la clothoïde associés à cette ligne candidate et en fonction de la ou des matrices de covariance associées aux lignes droite 1D et gauche 1G (selon que l'une ou les deux lignes ont été considérées pour définir la ligne candidate en question).

Divers algorithmes de transfert d'incertitude permettant de réaliser ce calcul pourraient être mis en œuvre. Un tel algorithme de transfert d'incertitude étant bien connu, il ne sera pas ici décrit en détail. On pourra seulement préciser que le calcul de la matrice de covariance peut se baser sur les formules suivantes :

[Math.4]
$$Var(AX) = A * Var(X) * A^T$$

[Math.5]
$$Var(X + Y) = Var(X) + cov(X, Y) + cov(Y, X) + Var(Y)$$

Dans ces deux équations, « Var » désigne la matrice de covariance et « cov » désigne la matrice de covariance croisée (ou « cross-covariance »). X et Y sont les vecteurs des variables des lignes détectées, alors de taille 6x1. A une matrice constante de taille 6x6 pour ce cas.

On notera qu'en admettant que les lignes sont détectées et estimées indépendamment, les matrices de covariance croisée cov(X,Y) et cov (Y,X) sont nulles.

Dans l'exemple illustré sur la [Fig.2] où le véhicule automobile 10 se trouve au niveau d'une sortie d'autoroute, la ligne candidate gauche 2G semble la plus appropriée si le véhicule reste sur l'autoroute alors que la ligne candidate droite 2D semble la plus appropriée si le véhicule sort de l'autoroute.

A ce stade, la présente invention propose donc de choisir la ligne candidate la plus appropriée à la situation.

Pour cela, une opération préliminaire de filtrage pourrait éventuellement être mise en œuvre afin de mettre de côté la ou les lignes candidates absurdes (par exemple une ligne candidate qui se rapprocherait trop de l'une des lignes de bord de voie).

Quoiqu'il en soit, au cours d'une quatrième étape E4, le calculateur calcule un paramètre qui permettra de sélectionner la meilleure ligne candidate, compte tenu des données relatives au véhicule automobile 10.

Ce paramètre est de préférence une distance statistique. Il s'agit plus précisément ici d'une distance de Mahalanobis $d_M$.

La méthode utilisée consiste alors, pour le calculateur 11, à calculer la distance de Mahalanobis $d_M$ entre chaque ligne candidate et le véhicule automobile 10 (à l'instant $t_0$ courant, au niveau du véhicule automobile 10).

Pour cela, le calculateur réalise le calcul suivant :

$$[Math.6]$$
$$d_M = \sqrt{(u-v)^T . (Su + Sv) . (u-v)}$$

Dans cette équation, u est un premier vecteur relatif à la ligne candidate considérée et Su est sa matrice de covariance. De la même manière, v est un second vecteur relatif au véhicule automobile 10 et Sv est sa matrice de covariance.

Préférentiellement, les vecteurs comportent un même nombre de coefficients, compris entre deux et six.

Ainsi pourrait-on prévoir que le premier vecteur u comporte six coefficients correspondant aux six coefficients de la clothoïde.

Toutefois, un nombre plus restreint de coefficients sera utilisé pour que le calcul ne requiert pas une puissance de calcul trop importante. Ici, seuls deux coefficients seront employés puisqu'il a été observé que les résultats demeuraient très fiables avec deux coefficients seulement.

L'un des coefficients de chaque vecteur est un angle de cap (un tel angle donnant en effet une bonne indication de l'intention du conducteur), tandis que l'autre coefficient est une courbure (l'angle de cap ne suffisant pas à indiquer cette intention si la route et la trajectoire du véhicule sont courbés).

Ici, le premier vecteur u est donc défini par :

$$u = [\Psi_0, c_0]^T$$

Le second vecteur v est défini par :

$$v = [\theta, c_{0, ego}]^T.$$

$\theta$ est l'angle de cap du véhicule automobile 10 et est égal soit à l'angle de braquage des roues avant, soit à la différence entre l'angle de braquage des roues avant et l'angle de braquage des roues arrière si ce dernier est non nul.

On notera que le premier vecteur u présentera des valeurs différentes d'une ligne candidate à l'autre.

On notera ici que la matrice de covariance Su sera déduite de la matrice de covariance attachée à la ligne candidate considérée.

La matrice de covariance Sv sera quant à elle lue (ses coefficients sont stockés dans la mémoire du calculateur et dépendent du type du capteur et de la méthode de détermination de l'incertitude du ou des capteurs utilisés - si plusieurs capteurs sont utilisés en combinaison). Cette matrice de covariance est donc déterminée de manière analogue à celles associées aux deux lignes de bord de voie. Ainsi, ici encore, si plusieurs capteurs sont utilisés en combinaison, il est possible d'associer entre elles les incertitudes liées à chaque capteur.

Lors de cette quatrième étape E4, la distance de Mahalanobis est alors calculée pour chacune des lignes candidates, à l'instant $t_0$.

La cinquième étape E5 consiste ensuite à sélectionner la ligne candidate pour laquelle la distance de Mahalanobis ainsi calculée est la plus faible.

Dans l'exemple illustré sur la [Fig.2], il s'agit de la ligne candidate droite 2D, ce qui apparait préférable dans la mesure où le véhicule roule en direction de la sortie d'autoroute.

Comme cela a été écrit précédemment, le procédé pourrait s'achever ici.

Toutefois, ce procédé se poursuit ici afin d'obtenir des résultats plus fiables encore, notamment lorsque le conducteur du véhicule change brusquement de comportement (par exemple pour finalement rester sur l'autoroute et ne pas en sortir).

Pour résumer, il est pour cela prévu d'estimer où se trouvera le véhicule à un instant t' futur et quelles seront ses caractéristiques dynamiques, puis de répéter une partie des étapes précitées afin de sélectionner l'une des lignes candidates (une autre ou la même que celle sélectionnée à l'étape E5).

L'instant t' est éloigné de l'instant $t_0$ d'une durée comprise entre 0,5 et 2 secondes, par exemple égale à 1 ou 1,3 seconde.

On peut décrire plus en détail ces différentes étapes subséquentes.

Lors d'une sixième étape E6, le calculateur 11 utilise une modélisation de prédiction du déplacement du véhicule afin de déterminer les données cinématiques que présentera le véhicule à l'instant t'.

Cette modélisation permet de simplifier les calculs. Elle a pour objet de calculer les coefficients du second vecteur v à l'instant t' ainsi que ceux de la matrice de covariance Sv.

La modélisation choisie pourra être plus ou moins simple et précise.

A titre d'exemple, il est possible d'utiliser un modèle d'évolution à courbure constante et accélération nulle, selon lequel la trajectoire prévisionnelle du véhicule est déduite du vecteur vitesse de ce véhicule, en considérant que la norme de ce vecteur vitesse ne va pas évoluer dans les prochaines secondes et que la direction de ce vecteur vitesse va continuer à évoluer à vitesse de lacet constante dans les prochaines secondes.

En variante, il est possible d'utiliser un modèle d'évolution à courbure et accélération constantes, selon lequel la trajectoire prévisionnelle du véhicule est déduite du vecteur vitesse et du vecteur accélération de ce véhicule.

D'autres variantes seraient bien entendu envisageables.

Grâce à cette modélisation, l'abscisse curviligne 1 indiquant la position du véhicule automobile à l'instant t' est calculé pour chaque ligne candidate.

Le premier vecteur u peut ainsi être calculé à l'instant t'. Sa matrice de covariance Su à l'instant t' peut aussi être calculée en utilisant un algorithme bien connu de transfert d'incertitude le long d'une ligne.

On pourra seulement préciser au sujet de cet algorithme qu'à l'abscisse curviligne 1, la matrice de covariance pourra être déduite des équations suivantes :

[Math.7]
$$\Sigma(l) = B * \Sigma(0) * B^T$$

Dans cette équation, B est une matrice définie ainsi :

[Math.8]
$$B = \begin{bmatrix} J & 0 \\ 0 & 1 \end{bmatrix}$$

Dans cette matrice B, J est la Jacobien de la fonction fl que l'on peut définir ainsi :

[Math.9]
$$s(l) = \begin{bmatrix} x(l) & y(l) & psi(l) & c(l) & c1 \end{bmatrix}^T = \begin{bmatrix} fl\begin{pmatrix} x0 & y0 & psi0 & c0 & c1 \end{pmatrix}^T & c1 \end{bmatrix}^T$$

On notera que le premier vecteur u peut aussi être recalculé compte tenu de l'équation de la clothoïde de la ligne candidate considérée, ainsi que sa matrice de covariance Su.

Au cours d'une sixième étape E7, connaissant les vecteurs u et v à l'instant t' et les matrices de covariance Su et Sv à ce même instant t', les distances de Mahalanobis à cet instant t' sont calculées et la ligne candidate présentant la distance minimale est sélectionnée puis stockée en mémoire (comme aux étapes E4 et E5).

A l'étape E8, la ligne candidate sélectionnée à l'instant $t_0$ (étape E5) est comparée par le calculateur 11 avec la ligne candidate sélectionnée à l'instant t' (étape E7).

S'il s'agit de la même ligne candidate, alors cette ligne candidate est définitivement choisie comme ligne centrale à considérer (étape E9).

Dans le cas contraire (par exemple parce que le conducteur commence à braquer son volant vers la droite pour ne finalement pas sortir de l'autoroute), une ligne hybride est construite puis définitivement choisie comme ligne centrale à considérer (étape E10).

Cette ligne hybride peut être construite de diverses manières.

A titre d'exemple, les résultats de la modélisation employée à l'étape E6 permettent de déterminer la position que devrait probablement occuper le véhicule automobile à l'instant t' et l'angle de lacet qu'il devrait présenter.

Connaissant la position courante de ce véhicule et son angle de lacet, il est possible de construire une ligne continue et continument dérivable passant par ces deux positions. Cette ligne peut par exemple être modélisée sous la forme d'une clothoïde ou sous une autre forme (typiquement polynomiale).

Elle est alors définitivement choisie comme ligne centrale à considérer.

La ligne centrale à considérer issue de l'étape E9 ou E10 peut alors être utilisée de façon à piloter les actionneurs du véhicule afin que ce dernier reste centré sur sa voie de circulation sans que le conducteur n'ait à intervenir. Elle peut également être utilisée pour mettre en œuvre d'autres fonctions d'aide à la conduite du véhicule, par exemple les fonctions de freinage d'urgence, d'évitement, de dépassement d'un véhicule tiers, de régulateur de vitesse adaptatif, d'avertissement de collision....

En outre, la ligne centrale pourra être affichée sur l'écran d'affichage du véhicule automobile, en superposition d'une image déjà affiché de ce véhicule et de son environnement.

La présente invention n'est nullement limitée au mode de réalisation décrit et représenté, mais l'homme du métier saura y apporter toute variante conforme à l'invention.

A titre d'exemple, le procédé pourrait être employé pour déterminer la forme de la ligne centrale d'une voie de circulation adjacente à celle empruntée par le véhicule automobile.

L'invention s'applique également au domaine de la robotique et à tout autre domaine dans lequel un objet doit suivre une trajectoire particulière sur une route (cette route étant ici entendue dans son acception la plus générale, comme une zone de circulation pour le robot).

**Revendications**

1.  Procédé de détection d'une ligne centrale d'une voie (1) d'une route empruntée par un véhicule automobile (10), comportant des étapes de :

    - acquisition, par un capteur tel qu'une caméra, ou un télédétecteur RADAR, ou un télédétecteur LIDAR, d'informations caractérisant deux lignes de bord de voie (1D, 1G),
    - acquisition de données relatives à la posture et/ou au déplacement du véhicule automobile (10) sur la route,
    - création d'au moins deux lignes centrales candidates (2D, 2G, 2DG) situées entre les deux lignes de bord de voie (1D, 1G), au cours de laquelle une unité électronique et/ou informatique (11) calcule des coefficients caractérisant lesdites au moins deux lignes centrales candidates (2D, 2G, 2DG) en fonction des informations acquises,
    - sélection d'une des lignes centrales candidates (2D, 2G, 2DG) en fonction d'une distance statistique calculée entre les au moins deux lignes candidates (2D, 2G, 2DG) et le véhicule automobile (10), et
    - déduction de la ligne centrale de la voie (1) en fonction de la ligne centrale candidate (2D, 2G, 2DG) sélectionnée.

2.  Procédé de détection selon la revendication précédente, dans lequel les coefficients caractérisant l'une au moins des lignes centrales candidates (2D, 2G) sont calculés en fonction uniquement des informations caractérisant l'une des deux lignes de bord de voie (1D, 1G) et de la largeur de la voie (1).

3.  Procédé de détection selon l'une des revendications précédentes, dans lequel les coefficients caractérisant l'une au moins des lignes centrales candidates (2DG) sont calculés en fonction des informations caractérisant les deux lignes de bord de voie (1D, 1G).

4.  Procédé de détection selon l'une des revendications précédentes, dans lequel exactement trois lignes centrales candidates (2D, 2G, 2DG) sont créées.

5.  Procédé de détection selon l'une des revendications précédentes, dans lequel :

    - il est prévu une étape d'estimation de données relatives à la posture et/ou au déplacement que le véhicule automobile (10) présentera à un instant futur,
    - il est prévu une autre étape de sélection d'une des lignes centrales candidates (2D, 2G, 2DG) en fonction des données estimées, et
    - la ligne centrale (1) de la voie est déduite en fonction également de la ligne centrale candidate (2D, 2G, 2DG) sélectionnée à ladite autre étape de sélection.

6.  Procédé de détection selon la revendication précédente, dans lequel, si la même ligne centrale candidate (2D, 2G, 2DG) a été sélectionnée deux fois à ladite étape de sélection puis à ladite autre étape de sélection, à l'étape de déduction, il est déduit que la ligne centrale de la voie (1) est la ligne centrale candidate (2D, 2G, 2DG) sélectionnée.

7.  Procédé de détection selon l'une des deux revendications précédentes, dans lequel, si les deux lignes centrales candidates (2D, 2G, 2DG) sélectionnées à ladite étape de sélection puis à ladite autre étape de sélection sont différentes, à l'étape de déduction, il est prévu de construire la ligne centrale (1) de la voie en fonction des coefficients caractérisant les deux lignes centrales candidates (2D, 2G, 2DG) sélectionnées.

8. Procédé de détection selon l'une des revendications précédentes, dans lequel la distance calculée entre le véhicule automobile (10) et chaque ligne centrale candidate (2D, 2G, 2DG) est une distance de Mahalanobis, qui dépend d'une matrice de covariance associée à ladite ligne centrale candidate (2D, 2G, 2DG).

9. Véhicule automobile (10) comportant des moyens d'acquisition d'informations caractérisant deux lignes de bord de voie (1D, 1G) d'une route empruntée par le véhicule automobile (10) et de données relatives à la posture et/ou au déplacement du véhicule automobile (10) sur la route, **caractérisé en ce qu'**il comporte un calculateur (11) adapté à mettre en œuvre un procédé de détection conforme à l'une des revendications précédentes.

**Patentansprüche**

1. Verfahren zur Erkennung einer Mittellinie einer Spur (1) einer von einem Kraftfahrzeug (10) benutzten Straße, umfassend folgende Schritte:

   - Erfassen, durch einen Sensor, wie etwa eine Kamera oder ein RADAR-Fernerkundungsgerät oder ein LIDAR-Fernerkundungsgerät, von Informationen, die zwei Spurrandlinien (1D, 1G) charakterisieren,
   - Erfassen von Daten bezüglich der Lage und/oder der Fortbewegung des Kraftfahrzeugs (10) auf der Straße,
   - Erzeugen von mindestens zwei potenziellen Mittellinien (2D, 2G, 2DG), die sich zwischen den zwei Spurrandlinien (1D, 1G) befinden, wobei eine Elektronik- und/oder Computereinheit (11) in Abhängigkeit von den erfassten Informationen Koeffizienten berechnet, die die mindestens zwei potenziellen Mittellinien (2D, 2G, 2DG) charakterisieren,
   - Auswählen einer der potenziellen Mittellinien (2D, 2G, 2DG) in Abhängigkeit von einem zwischen den mindestens zwei potenziellen Linien (2D, 2G, 2DG) und dem Kraftfahrzeug (10) berechneten statistischen Abstand und
   - Ableiten der Mittellinie der Spur (1) in Abhängigkeit von der ausgewählten potenziellen Mittellinie (2D, 2G, 2DG).

2. Erkennungsverfahren nach dem vorhergehenden Anspruch, wobei die Koeffizienten, die mindestens eine der potenziellen Mittellinien (2D, 2G) charakterisieren, ausschließlich in Abhängigkeit von den Informationen, die eine der zwei Spurrandlinien (1D, 1G) charakterisieren, und der Breite der Spur (1) berechnet werden.

3. Erkennungsverfahren nach einem der vorhergehenden Ansprüche, wobei die Koeffizienten, die mindestens eine der potenziellen Mittellinien (2DG) charakterisieren, in Abhängigkeit von den Informationen berechnet werden, die die zwei Spurrandlinien (1D, 1G) charakterisieren.

4. Erkennungsverfahren nach einem der vorhergehenden Ansprüche, wobei genau drei potenzielle Mittellinien (2D, 2G, 2DG) erzeugt werden.

5. Erkennungsverfahren nach einem der vorhergehenden Ansprüche, wobei:

   - ein Schritt des Schätzens von Daten bezüglich der Lage und/oder der Fortbewegung, die das Kraftfahrzeug (10) zu einem zukünftigen Zeitpunkt aufweisen wird, vorgesehen ist,
   - ein weiterer Schritt des Auswählens einer der potenziellen Mittellinien (2D, 2G, 2DG) in Abhängigkeit von den geschätzten Daten vorgesehen ist und
   - die Mittellinie der Spur (1) ferner in Abhängigkeit von der potenziellen Mittellinie (2D, 2G, 2DG), die während des weiteren Auswahlschritts ausgewählt wird, abgeleitet wird.

6. Erkennungsverfahren nach dem vorhergehenden Anspruch, wobei, wenn während des Auswahlschritts und dann während des weiteren Auswahlschritts dieselbe potenzielle Mittellinie (2D, 2G, 2DG) zweimal ausgewählt wurde, während des Ableitungsschritts abgeleitet wird, dass die Mittellinie der Spur (1) die ausgewählte potenzielle Mittellinie (2D, 2G, 2DG) ist.

7. Erkennungsverfahren nach einem der zwei vorhergehenden Ansprüche, wobei, wenn sich die zwei potenziellen Mittellinien (2D, 2G, 2DG), die während des Auswahlschritts und dann während des weiteren Auswahlschritts ausgewählt wurden, unterscheiden, während des Ableitungsschritts das Konstruieren der Mittellinie der Spur (1) in Abhängigkeit von den Koeffizienten, die die zwei ausgewählten potenziellen Mittellinien (2D, 2G, 2DG) charakterisieren, vorgesehen ist.

8. Erkennungsverfahren nach einem der vorhergehenden Ansprüche, wobei der zwischen dem Kraftfahrzeug (10) und jeder potenziellen Mittellinie (2D, 2G, 2DG) berechnete Abstand ein Mahalanobis-Abstand ist, der von einer Kovarianzmatrix abhängt, die mit der potenziellen Mittellinie (2D, 2G, 2DG) assoziiert ist.

9. Kraftfahrzeug (10), das Mittel zur Erfassung von Informationen, die zwei Spurrandlinien (1D, 1G) einer von dem Kraftfahrzeug (10) benutzten Straße charakterisieren, und von Daten bezüglich der Lage und/oder der Fortbewegung des Kraftfahrzeugs (10) auf der Straße umfasst, **dadurch gekennzeichnet, dass** es eine Recheneinheit (11) umfasst, die dazu angepasst ist, ein Erkennungsverfahren nach einem der vorhergehenden Ansprüche umzusetzen.

**Claims**

1. Method for detecting a central line of a lane (1) of a road taken by a motor vehicle (10), comprising steps of:

   - acquisition, by a sensor such as a camera, or a RADAR remote sensor, or a LIDAR remote sensor, of information characterizing two lane edge lines (1D, 1G),
   - acquisition of data relating to the position and/or the movement of the motor vehicle (10) on the road,
   - creation of at least two candidate central lines (2D, 2G, 2DG) located between the two lane edge lines (1D, 1G), during which an electronic and/or computer unit (11) calculates coefficients characterizing said at least two candidate central lines (2D, 2G, 2DG) on the basis of the acquired information,
   - selection of one of the candidate central lines (2D, 2G, 2DG) on the basis of a statistical distance calculated between the at least two candidate lines (2D, 2G, 2DG) and the motor vehicle (10), and
   - deduction of the central line of the lane (1) on the basis of the selected candidate central line (2D, 2G, 2DG).

2. Detection method according to the preceding claim, wherein the coefficients characterizing at least one of the candidate central lines (2D, 2G) are calculated solely on the basis of the information characterizing one of the two lane edge lines (1D, 1G) and the width of the lane (1).

3. Detection method according to one of the preceding claims, wherein the coefficients characterizing at least one of the candidate central lines (2DG) are calculated on the basis of the information characterizing the two lane edge lines (1D, 1G).

4. Detection method according to one of the preceding claims, wherein exactly three candidate central lines (2D, 2G, 2DG) are created.

5. Detection method according to one of the preceding claims, wherein:

   - a step of estimating data relating to the position and/or the movement that the motor vehicle (10) will have at a future time is provided,
   - a further step of selecting one of the candidate central lines (2D, 2G, 2DG) on the basis of the estimated data is provided, and
   - the central line of the lane (1) is deduced also on the basis of the candidate central line (2D, 2G, 2DG) selected in said further selection step.

6. Detection method according to the preceding claim, wherein, if the same candidate central line (2D, 2G, 2DG) has been selected twice in said selection step then in said further selection step, it is deduced, in the deduction step, that the central line of the lane (1) is the selected candidate central line (2D, 2G, 2DG).

7. Detection method according to one of the two preceding claims, wherein, if the two candidate central lines (2D, 2G, 2DG) selected in said selection step then in said further selection step are different, provision is made, in the deduction step, to construct the central line of the lane (1) on the basis of the coefficients characterizing the two selected candidate central lines (2D, 2G, 2DG).

8. Detection method according to one of the preceding claims, wherein the calculated distance between the motor

EP 4 227 912 B1

vehicle (10) and each candidate central line (2D, 2G, 2DG) is a Mahalanobis distance, which depends on a covariance matrix associated with said candidate central line (2D, 2G, 2DG).

9. Motor vehicle (10) comprising means for acquiring information characterizing two lane edge lines (1D, 1G) of a road taken by the motor vehicle (10) and data relating to the position and/or the movement of the motor vehicle (10) on the road, **characterized in that** it comprises a computer (11) designed to implement a detection method according to one of the preceding claims.

[Fig. 1]

[Fig. 2]

[Fig. 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Precise curvature estimation by cooperating with digital road map. **CHENHAO WANG et al.** INTELLIGENT VEHICLES SYMPOSIUM, 2008 IEEE. IEEE, 04 June 2008, 859-864